# EUROPEAN PATENT APPLICATION

(11) **EP 1 696 650 A1**
(43) Date of publication of application: **30.08.2006**
(21) Application number: 05004040.1
(22) Date of filing: 24.02.2005
(51) Int. Cl.: H04M 7/00, H04L 12/66

(54) **System and method providing VoIP communication services**

(71) Applicant: Gemtek Systems, Inc., 302 Chu-Pei City, Hsin-Chu County (TW)
(72) Inventor: Chen, Hung Wen, Ind. Park 302Chu-PeiCity Hsin-Chu County (TW); Quiang, Gang, Ind. Park 302Chu-PeiCity Hsin-Chu County (TW); Wang, Lee, Ind. Park 302Chu-PeiCity Hsin-Chu County (TW)
(74) Representative: Winkler, Andreas Fritz Ernst

(57) **Abstract**

In order to provide communication service i.e. telephony using VoIP across various networks PSTN and Internet, the method for providing communication service via the client representatives (104,114) also known as gateways is disclosed. First, the communication service request (51) from a first terminal would be received by a management system (101) through Internet (102). By accessing the database, the management system then obtains the link information (52) according to the communication service request, wherein the link information includes information of the client representative and the second terminal. After that, through Internet, the link information would be returned (53) to the first terminal, and the first terminal may connect (54) to the client representative. Finally, the communication service between the first terminal and the second terminal is therefore generated (55) by relaying the connection to the second terminal through PSTN.

## Description

### FIELD OF INVENTION:

The present invention is related to a method for providing service via a client representative, particularly to a method for providing communication service across different networks via a plurality of client representatives.

### BACKGROUND OF INVENTION:

Internet is designed as an open structure to exchange information freely without restriction. Exchanging information between entities through Internet has become the most convenient and cost-effective way for communication. Because of the development of the information technology (IT) and the network infrastructure, the information could be exchanged with higher capacity and faster speed. Thus, certain communication service requiring real time information exchange, such as conducting a conversation in separated locations or viewing a live video, has become feasible through Internet.

Voice is the most effective means of communication available to human beings. The vocabularies available to each person, perhaps over multiple languages, exceed the written words in variation and speed. Usually, the way something is said would be more important than the meaning of words. The verbal ability to convey emotion is unparalleled in other modes. This is why almost everyone has a telephone. In fact, most families have several telephones. With the advent of cellular technology, many people carry a telephone with them everywhere, so that the power of verbal communication is available to them wherever they go.

In information technology industry, a lot of effort has been put on transmitting voice data through Internet. The VoIP (Voice over Internet Protocol) is a popular Internet protocol about the transmission of voice data packets. VoIP has become widespread among Internet users. It is desirable to extend VoIP to link the regular phone systems for forming a greater communication network. Conventionally, the VoIP operators are needed to obtain telephone lines from phone companies for linking themselves to the regular phone systems. This approach requires the phone companies to set up many extra lines and equipments in the phone company Central Office (CO). A lot of fortune would be spent in order to build a fair large scale of such system linkage. Therefore, the applications of VoIP are still constrained within the Internet users.

Moreover, the service fee of conventional telephone is relatively higher than that of Internet service, especially as the communicating terminals are resided in different countries. With the raising of the bandwidth of Internet, it is sufficient to transfer considerable quantities of data between remote terminals. However, the Internet users could only communicate with other users who are also coupled to Internet. In order to provide inexpensive communication service between users from different countries, a more efficient and economical way should be provided to integrate the traditional telephone service and the recent voice service over Internet.

### SUMMARY OF THE INVENTION:

In light of the aforementioned problems, the present invention thus discloses methods for providing communication service via client representatives through Internet. With the present invention, the cost for establishment and maintenance could be remarkably reduced.

According to one aspect of the present invention, the method for providing a communication service via a client representative is provided. First, the communication service request from a first terminal would be received by a management system through Internet. By accessing the database, the management system then obtains the link information according to the communication service request, wherein the link information includes information of the client representative and the second terminal. After that, through Internet, the link information would be returned to the first terminal, and the first terminal may connect to the client representative. Finally, the communication service between the first terminal and the second terminal is therefore generated by relaying the connection to the second terminal through PSTN.

According to another aspect of the present invention, the method for providing a communication service via a client representative is provided. First, the communication service request from a first terminal would be received by a client representative through PSTN. The client representative forwards or relays the communication service request to a management system through Internet. By accessing the database, the management system then obtains the link information according to the communication service request, wherein the link information includes information of a second terminal. Next, the link information would be returned to the client representative through Internet. The client representative then connects to the second terminal though Internet. Eventually, the communication service between the first terminal and the second terminal could be generated by relaying the connection to the first terminal through PSTN.

### BRIEF DESCRIPTION OF THE DRAWING:

For a better understanding of the present invention and to show how it may be implemented, reference will now be made to the following drawings:
Fig. 1 is a block diagram showing the communication service system;
Fig. 2 is a block diagram showing one embodiment of the relation of the client representative, the terminal and CMS.
Fig. 3 is a block diagram showing one embodiment of the connecting between two terminals via a client representative;
Fig. 4 is a block diagram showing another embodiment of the connecting between two terminals via a client representative;
Fig. 5 is a flow chart illustrating one embodiment of the method of the present invention;
Fig. 6 is a flow chart illustrating another embodiment of the method of the present invention; and
Fig. 7 is a block diagram showing the apparatus of the client representative.
Fig. 8 is a block diagram showing the communication service system with security.

### DESCRIPTION OF THE PREFERRED EMBODIMENT:

The present invention is described with the preferred embodiments and accompanying drawings. It should be appreciated that all the embodiments are merely used for illustration. Although the present invention has been described in terms of a preferred embodiment, the invention is not limited to this embodiment. The scope of the invention is defined by the claims. Modifications within the spirit of the invention will be apparent to those skilled in the art. For example, although the invention inventions employs VoIP and phone systems for voice service linkage, the services such as text message services (emails and short messages) or even video service can also be applied to the present service system.

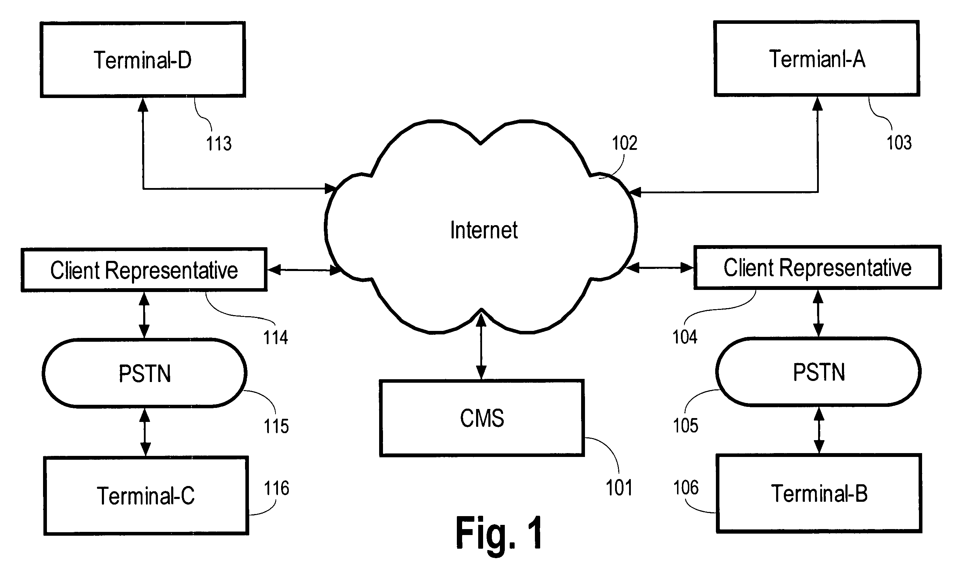

In Fig. 1, a novel concept of client representative is proposed. The client representative is not only a client, but also an agent with the ability to relay the communication services from Internet to different network, such as PSTN (public switch telephone network). Pluralities of terminals are coupled to the central management system (CMS)101, and four terminals are illustrated in FIG. 1 as an example, which are terminal-A 103, terminal-B 106, terminal-C 116 and terminal-D 113, resided in various networks. It should be noted that the number of the terminals is not limited to four, and the present invention would encompass any possible number of terminals. As we can see, terminal-A 103 and terminal-D 113 are both coupled to Internet 102, and the terminals preferably include but not limited to the computers, the PDA, cellular or the smart phone, which are able to access Internet. The data exchange between them could be implemented directly through Internet 102.

The terminal-A 103 and terminal-B 106, for instance, are situated in different networks, which are Internet 102 and PSTN 105. These two terminals therefore could not communicate with each other directly. According to the preferred embodiment of the present invention, the client representatives 104, 114 bridging the two different networks are provided to facilitate the communication between terminals in varied networks. Each client representative is connected to Internet and wired phone systems through an apparatus designed for network or system interfacing. Namely, the apparatus is able to relay and link services between various systems or networks. Since the linkages are made via many client representatives in various locations, no link station of aggregative type would be required. Such linkage refers to cross-link. Hence, under the construction of the present system, the cross-link communication services can be established through the apparatus, namely client representatives. The diversities of the linkages between systems increase the opportunity for a link service, while the aggregative type of link station may suffer the bottleneck limitation or equipment impairment in the link station resulting in poor service links or even out of service. Therefore, the present system may provide unexpected result without the aggregative type of link station.

The central management system 101 is provided to couple Internet 102 to maintain and record the activities of client representatives. The data therein can be used for efficiently routing services and service cost settlement. Note that the whole system is fully distributed without any aggregative service stations, so the management systems 101 is applied only for management and recording. Further, the deployment of a large number of client representatives with the link apparatuses dramatically increases the service coverage. The distributed client representatives improve the efficiency of system links compared with aggregative network setups, where some extra lines and equipments in Central Office (CO) are required. In the present system and method, only central management system 101 is required.

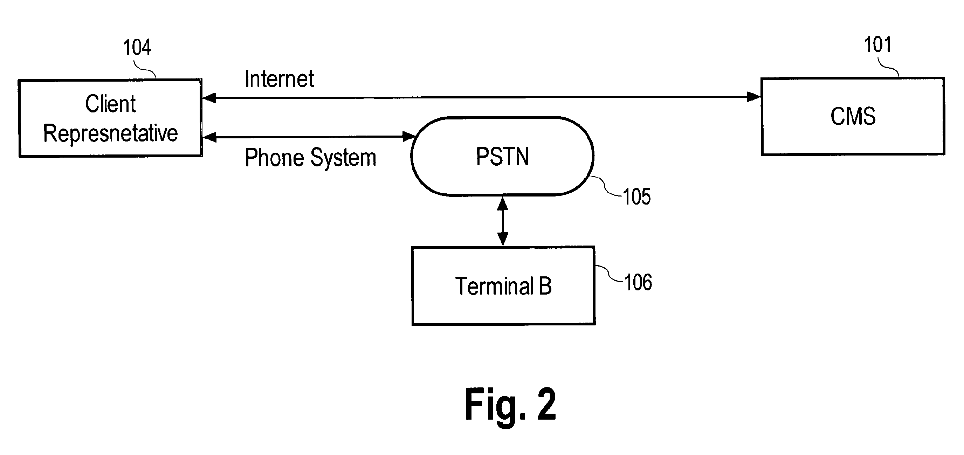

Fig. 2 shows the status communications between the client representative 104 and the CMS 101. Through Internet, the client data in the CMS 101 are updated, and the service or contract is upgraded from CMS 101 to the client representative 104. It is a convenient and economic way to manage a great number of clients and client representatives through Internet. The data sent from CMS 101 to client representative 104 may include the upgrade service type, the security keys and the status probing request. In the other hand, the data sent from client representative 104 to CMS 101 may include the network (preferably Ethernet) ID, the phone network ID, the contract type, the availability status for relaying service, and the acknowledgement of status probing request.

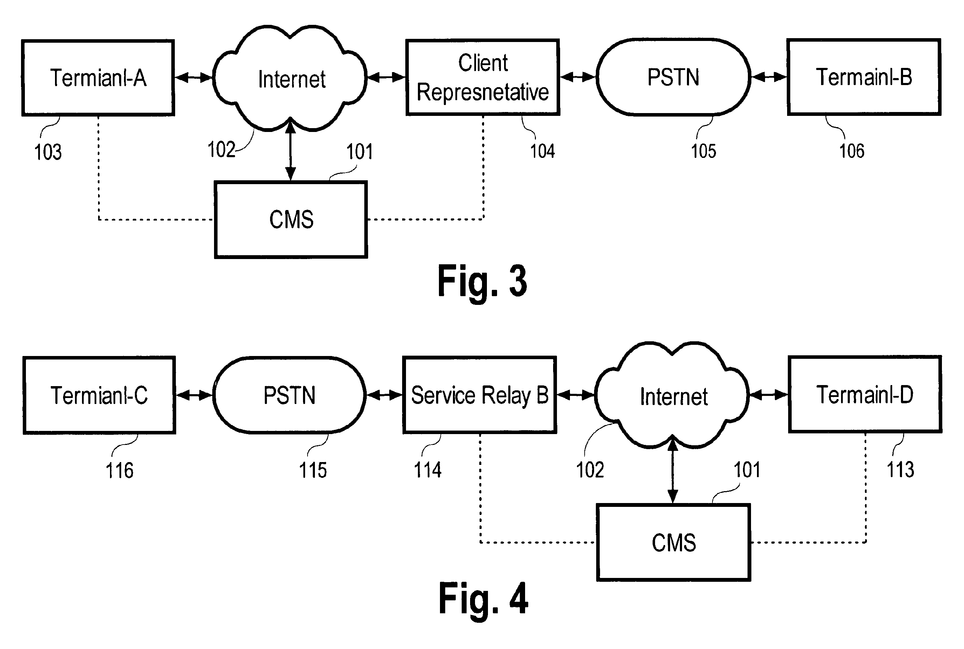

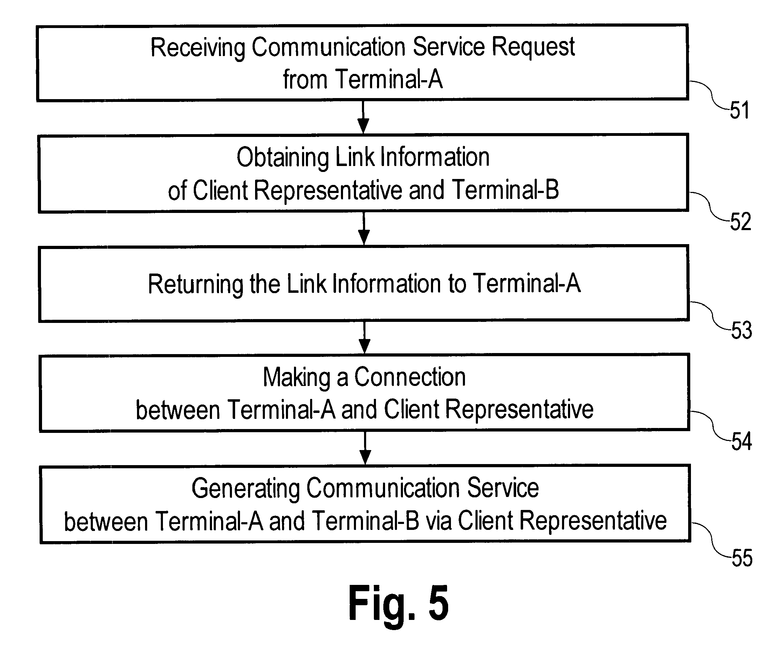

Referring to Fig. 3 and Fig. 5, as the client originator applies terminal-A 103 to make a communication service request for communicating with terminal-B 106 of the designator, the IDs of terminal-A 103 and terminal-B 106 would be provided to CMS 101. The CMS 101 would receive the request via Internet 102, as shown in step 51. First, the CMS 101 discriminates the ID of terminal-B to determine that this ID is an internal user ID or an external network ID. Since the terminal-B 106 is not coupled to Internet 102, the ID of terminal-B would be an external ID. Accordingly, the terminal-B 106 may not communicate with the terminal-A 103 directly though certain single network. With the data from a client representative database, the CMS 101 would look for a proper client representative 104 to relay the service request to the terminal-B 106, and the link information of the client representative 104 and the terminal-B 106 would be obtained, as shown in step 52. Such link information then is returned to the terminal-A 103 in step 53. With the link information, the terminal-A 103 would connect to the client representative 104 through Internet 102, as shown in step 54.

It should be noted that the connection between the terminal-A 103 and the client representative 104 is made independent of the CMS 101 according to the preferred embodiment of the present invention. The CMS 101 herein is mainly applied to pairing the client representative and terminals, and to provide a database for keeping the information of client representative statuses, terminal positions, service bills and other useful data. For example, if it is an internal user ID, CMS maps the Internet IP address and port number, and informs the originator with the designator information to make the connection. If the designation ID is an external network ID, CMS analyzes with the client representative database to find out best representative for the relay service according to its service status, cost, and statistical history. Once the relay client representative is identified, CMS maps the Internet IP address and port number, and informs originator with the client representative information to make connection. After the client representative making Internet connection with the originator, the client representative automatically relays the call service to the designator outside the Internet network.

The client representative 104 is able to relay the communication service request to the terminal-B 106 through PSTN 105, and therefore generating the communication service between the terminal-A 103 and the terminal-B 106, as shown in step 55.

The communication service content preferably includes the voice, the text massage, the image or the video. According to one embodiment of the present invention, the content types of the communication service would depend on the support of the first and second network.

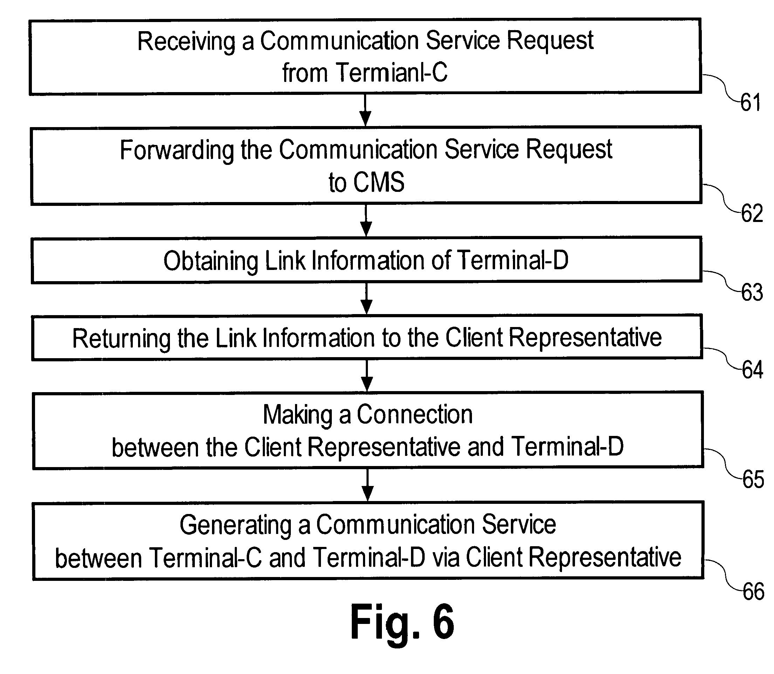

Referring to Fig. 4 and Fig. 6, as the originator applies the terminal-C 116 coupled to PSTN 115 to make a service request to communicate with the terminal-D 113 coupled to Internet 102, a client representative 114 is required. First, the terminal-C 116 would make a communication service request to the client representative 114 via PSTN 115. As shown in step 61, the request is received by the client representative 114. In this situation, the client representative 114 should act as a request originator. In other words, the client representative 114 would relay or forward the communication service request to CMS 101 through Internet 102, as shown in step 62. If the terminal-D 113 is also coupled to Internet, the link information of terminal-D 113 is obtained by accessing the database of CMS 101, as in step 63. Otherwise, the link information of another client representative coupled to the terminal-D 113 would be obtained.

Next, in step 65, the client representative 114 may connect to the terminal-D 113 according to the link information through Internet 102. Therefore, the terminal-C 116 is able to communicate with terminal-D 113 via the client representative 114, as shown in step 66.

The types of terminal-B and terminal-C may include the telephone, the cellular phone or the smart phone. It should be appreciated that the device types of terminals could be varied depending on the support of available networks. The present invention would encompass all possible kinds of communication devices with the ability to access the various networks. Besides, the PSTNs 115 and 105 may be the same or connected networks.

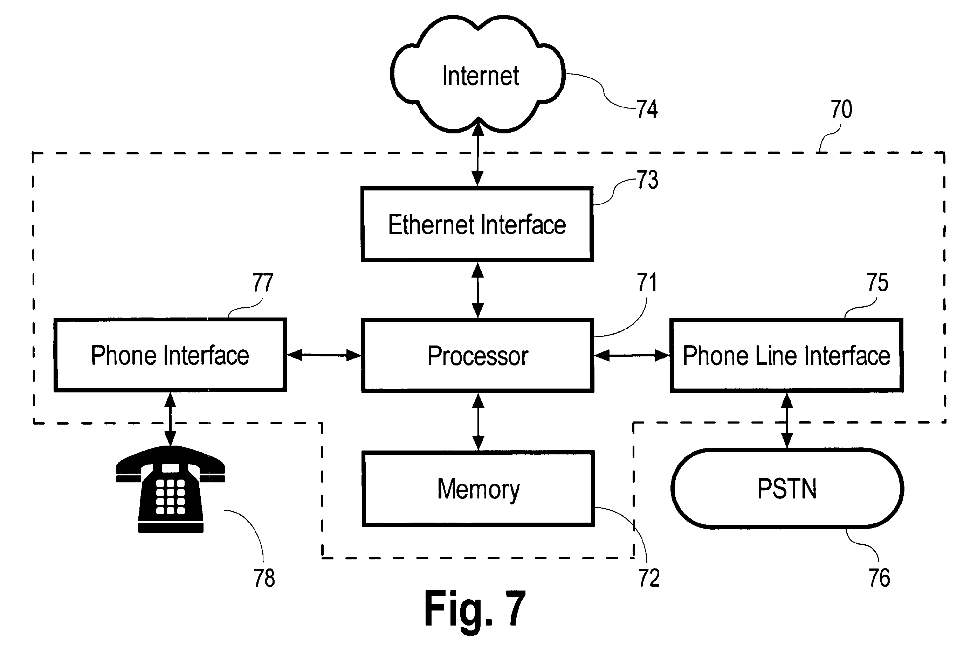

Referring to Fig. 7, to bridge different network, the client representative may require an apparatus 70. In one embodiment of the present invention, the apparatus 70 may comprises a processor 71, a phone line interface 75 coupled to the processor 71, an Ethernet interface 73 coupled to the processor 71. A phone interface 77 and memory 72 are both coupled to the processor 71, respectively. Memory 72 includes non-volatile memory such as flash and SDRAM for different purposes as well-known in the art. The processor 71 is applied to handle all calling setup and network linkage. The Ethernet interface 73 provides Internet ports to a broadband modem or other Internet device. Memory is used to store the dynamic or permanent data, such as the program instructions.

The phone line interface is constituted with two parts, which are codec portion and DAA (data access arrangement). The codec portion would perform converting process between analog signals and digital signals, and the DAA emulates a phone. The main function of the DAA is to remove the high voltage DC bias and passing only the analog AC signals from the PSTN 76 by applying a loop closure toward the PSTN 76. The phone interface 77 is also constituted with two parts, which are codec portion and SLIC (subscribe line interface circuit). The codec portion is similar with that of the phone line interface 75, and the SLIC emulates the PSTN voltage levels. Additionally, the SLIC would detect whether the phone 78 coupled thereto is on-hook or off-hook and generate ringing voltage up to 120V.

The client representative of the present invention is not only a client but also an agent, and has the ability to access both Internet and already existing phone systems (such as PSTN). Since the terminals or clients are linked via a lot of distributed client representatives located in various places, no link station of aggregative type is required. Besides, while the link station of aggregative type may suffer the bottleneck limitation or require equipment impairment, which results in poor linking service or out of service, the diversity of the linkages between available systems could increase the facility of the link service. In addition, the deployment of a large number of client representatives with the linking apparatuses may dramatically increase the service coverage. The distributed client representatives may also improve the efficiency of system links in comparison with aggregative network link station, for few extra lines and equipments in Central Office (CO) are required.

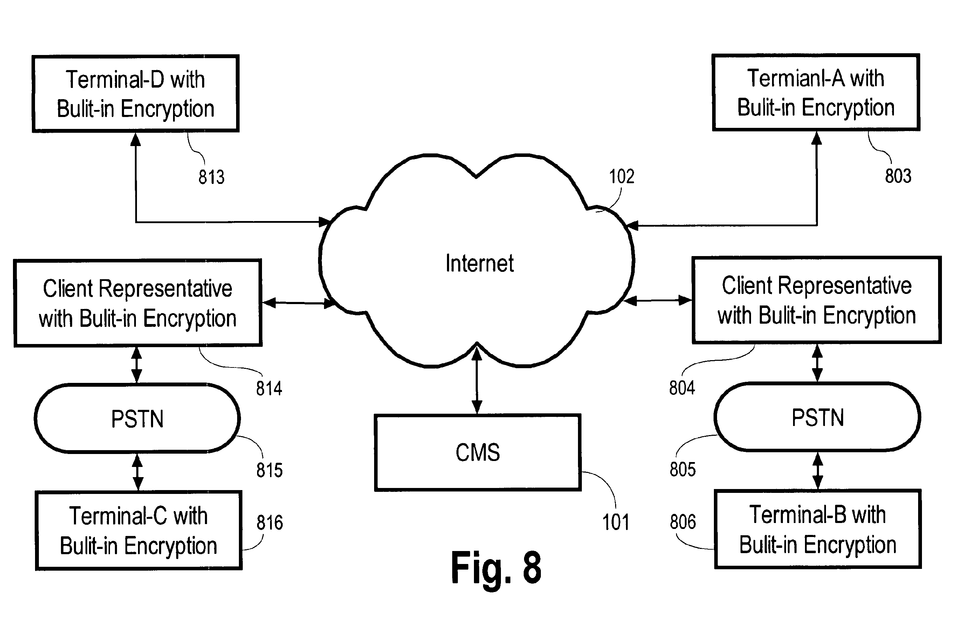

In the communication content is confidential, the terminals would have a built-in codebook, and be provided with the encryption key by CMS 101. Referring to Fig. 8, as receiving a secure service request from an originator terminal, CMS 101 firstly verifies the availability of the recipient terminal. Next, CMS 101 would return the link information with an assigned encryption key. With the encryption key, the originator terminal could securely communicate with the recipient terminal via certain client representative. The client representative is designed that the data package between both terminals are not reachable by external tapping.

CMS 101 may maintain the database for service management and billing. That is, the profile data of the client (terminal) and the client representative is stored in the database. Additionally, the service duration of each client and client representative is recorded in the database for charging the service fee from the client and paying the relay wages to the client representative. Besides, the client may report the service quality of individual client representative to CMS 101.

The conferencing call is achieved by using multiple link information in a multiple slot format from an originator to CMS. A conferencing call originator sends the conferencing call request to CMS. CMS searches in its database to find out the link information including relay client representative, and sends back to conferencing call originator. Then originator uses the link information from CMS to link each conferencing clients to its available channels. The conferencing calls is established. For a client to make a call using the VoIP network, one can call a client representative number through a regular phone system. The client representative can act like a service originator agent to initiate the call to CMS. CMS then sends back the link information back to the client representative. Client representative can make the link to the internal client or through another client representative to the outside network designation. After completing the call, the client representative with the initiation then sends the service report back to CMS for recording. The call outside the Internet system is accomplished.

The application of the apparatus in the client representative is quite economical. Compared with the equipments in the aggregative stations, the cost for deploying the apparatus is relatively low. Moreover, the apparatus could be easily replaced as broken, and therefore almost no maintenance cost is required. Hence, the distributed system with client representatives is certainly more cost effective than that with aggregative stations.

As is understood by a person skilled in the art, the foregoing preferred embodiments of the present invention are illustrated of the present invention rather than limiting of the present invention. It is intended to cover various modifications and similar arrangements included within the spirit and scope of the appended claims, the scope of which should be accorded the broadest interpretation so as to encompass all such modifications and similar structure. While the preferred embodiment of the invention has been illustrated and described, it will be appreciated that various changes can be made therein without departing from the spirit and scope of the invention.

## Claims

1. A method for providing a communication service via a client representative, which comprises:
receiving a communication service request from a first terminal through a first network by a management system;
obtaining link information according to said communication service request by accessing a database of said management system, wherein said link information includes information of a client representative and a second terminal;
returning said link information to said first terminal through said first network; and
establishing a connection between said client representative and said first terminal, thereby providing said communication service between said first terminal and said second terminal by relaying said connection to said second terminal through a second network.

2. The method as set forth in claim 1, wherein said first terminal includes a client representative, and a third terminal makes said communication service request via a third network to said first terminal.

3. The method as set forth in claim 1, wherein said first and second networks include a wide area network (WAN), a local area network (LAN) or a public switch telephone network (PSTN), and said first network is different from said second network.

4. The method as set forth in claim 1, wherein said link information includes an IP address or an ID number of said client representative.

5. The method as set forth in claim 1, wherein said client representative comprises:
a processor;
an Ethernet interface coupled to said processor for accessing Ethernet;
a phone interface coupled to said processor for connecting a phone;
a phone line interface coupled to said processor for connecting a phone line; and
memory coupled to said processor for storing digital data.

6. A method for providing a communication service via a client representative, which comprises:
receiving a communication service request from a first terminal through a first network by a client representative;
forwarding said communication service request to a management system through a second network;
obtaining link information according to said communication service request by accessing a database of said management system, wherein said link information includes information of a second terminal;
returning said link information to said client representative through said second network; and
establishing a connection between said client representative and said second terminal, thereby generating said communication service between said first terminal and said second terminal by relaying said connection to said first terminal through said first network.

7. The method as set forth in claim 6, wherein said connection is relayed to said first terminal by said client representative.

8. The method as set forth in claim 6, wherein said client representative includes a apparatus, which comprises:
a processor;
an Ethernet interface coupled to said processor for accessing Ethernet;
a phone interface coupled to said processor for connecting a phone;
a phone line interface coupled to said processor for connecting a phone line; and
memory coupled to said processor for storing digital data.

9. A cross-link communication system comprising:
a central management system (CMS);
pluralities of first terminals coupled to said central management system (CMS) via a first network;
pluralities of client representatives coupled between said first network and a second network; and
pluralities of second terminals coupled to said second network, wherein said client representative has the ability to relay the communication services from said first network to said second network.

10. The system as set forth in claim 9, wherein said client representative has the ability to relay the communication services from a first network to a second network, wherein said client representative includes:
a processor;
an Ethernet interface coupled to said processor for accessing Ethernet;
a phone interface coupled to said processor for connecting a phone;
a phone line interface coupled to said processor for connecting a phone line; and
memory coupled to said processor for storing digital data.

## Amended claims

### Amended claims in accordance with Rule 86(2) EPC.

**1.** A method for providing a communication service via a client representative, **characterized by** the following steps: receiving a communication service request from a first terminal through a first network by a management system; obtaining link information according to said communication service request by accessing a database of said management system, wherein said link information includes information of a client representative and a second terminal; returning said link information to said first terminal through said first network; and establishing a connection between said client representative and said first terminal, thereby providing said communication service between said first terminal and said second terminal by relaying said connection to said second terminal through a second network, wherein said client representative is a client terminal coupled to said first network and said second network.

**2.** The method as set forth in claim 1, wherein said first terminal includes a client representative, and a third terminal makes said communication service request via a third network to said first terminal.

**3.** The method as set forth in claim 1, wherein said first and second networks include a wide area network (WAN), a local area network (LAN) or a public switch telephone network (PSTN), and said first network is different from said second network.

**4.** The method as set forth in claim 1, wherein said link information includes an IP address or an ID number of said client representative.

**5.** The method as set forth in claim 1, wherein said client representative comprises an apparatus including: a processor; an Ethernet interface coupled to said processor for accessing Ethernet; a phone interface coupled to said processor for connecting a phone; a phone line interface coupled to said processor for connecting a phone line; and memory coupled to said processor for storing digital data.

**6.** The method as set forth in claim 1, wherein said connection is relayed to said second terminal by said client representative.

**7.** A cross-link communication system **characterized by**: a central management system (CMS); pluralities of first terminals coupled to said central management system (CMS) via a first network; pluralities of client representatives coupled between said first network and a second network, wherein said client representatives are client terminals; and pluralities of second terminals coupled to said second network, wherein said client representative has the ability to relay the communication services from said first network to said second network.

**8.** The system as set forth in claim 7, wherein said client representative has the ability to relay the communication services from a first network to a second network, wherein said client representative comprises: a processor; an Ethernet interface coupled to said processor for accessing Ethernet; a phone interface coupled to said processor for connecting a phone; a phone line interface coupled to said processor for connecting a phone line; and memory coupled to said processor for storing digital data.

**9.** The system as set forth in claim 7, wherein said first network includes a wide area network (WAN) or a local area network (LAN), and said first terminal includes a computer, a personal digital assistant (PDA) or a smart phone.

**10.** The system as set forth in claim 7, wherein said first network includes a public switch telephone network (PSTN), and said first terminal includes a telephone, a cellular phone or a smart phone.
